Europäisches Patentamt

European Patent Office

Office européen des brevets

(11) Publication number: **0 219 260**
A2

# EUROPEAN PATENT APPLICATION

(21) Application number: 86307469.6

(22) Date of filing: 30.09.86

(51) Int. Cl.⁴: **B 60 T 11/20**

(30) Priority: 08.10.85 GB 8524817

(43) Date of publication of application:
22.04.87 Bulletin 87/17

(84) Designated Contracting States:
DE FR GB IT

(71) Applicant: LUCAS INDUSTRIES public limited company
Great King Street
Birmingham, B19 2XF West Midlands(GB)

(72) Inventor: Farr, Glyn Phillip Reginald
21, The Hamlet
Leek Wootton Warwickshire(GB)

(74) Representative: Waite, Anthony William et al,
MARKS & CLERK Alpha Tower Suffolk Street Queensway
Birmingham B1 1TT(GB)

(54) Hydraulic brake master cylinder.

(57) A master cylinder comprises a pressure cylinder (1) having a closed end (2) and a piston (4) movable therein. A separate valve component (16) disposed within the cylinder adjacent the end (2) provides a passage (18) between a valve port (19) of the component and a space (21) of the cylinder and provides a valve seat for co-operation with a valve member (20) to control fluid flow past the port.

EP 0 219 260 A2

## HYDRAULIC BRAKE MASTER CYLINDER.

This invention relates to an hydraulic brake master cylinder intended for use in a vehicle hydraulic braking system.

Our prior Patent No. 1062625 illustrates a master cylinder in which a port formed in an end wall of the pressure cylinder axial bore can be sealed from the bore by a valve member movable with an hydraulic piston within the cylinder bore. Such a valve arrangement is often referred to as a "centre valve" and is inherently expensive to manufacture because it necessitates precision machining of the end wall of the cylinder in order to provide the necessary valve seat for engagement by the valve member, such machining being particularly difficult since it takes place at the end of a long bore.

Moreover, centre valve arrangements are difficult to incorporate in modern fabricated steel tube master cylinders having relatively thin walls because there is insufficient material in which to incorporate the necessary passages and/or to permit the machining of the cylinder end wall to provide a valve seating.

An object of the present invention is to provide an hydraulic brake master cylinder in which a centre valve arrangement is incorporated in a simple and convenient manner irrespective of the nature of the pressure cylinder used.

According to the invention, an hydraulic master cylinder comprises a pressure cylinder having a closed end, at least one piston movable therein, a separate valve component disposed within the cylinder adjacent said closed end and held against a fixed surface, said component providing a passage between a valve port of the component and a flow path of said cylinder, and a valve member associated with said piston and operable to control fluid flow past said valve port.

The use of such a separate valve component enables a centre valve arrangement to be provided without the necessity to machine the closed end face of the cylinder bore since the insert itself may be readily machined to provide the required valve seat. Moreover, the necessary passage for providing communication between the valve port and said fluid flow path, such as an inlet/outlet port of the cylinder may be provided in the valve component, enabling a centre valve arrangement to be incorporated in a fabricated steel tube type of master cylinder of which the cylinder body has insufficient substance to house said passage.

In one convenient arrangement, the valve member is normally urged towards its open position and moved, as a result of operative movement of the piston, to a position in which it closes said valve port.

Preferably, said valve component is shaped to provide an annular chamber communicating with an inlet/outlet port of the cylinder and said passage communicates with said chamber. The valve port may conveniently be in the form of an axially directed opening with said passage extending radially between the valve port and said flow path, the valve member co-operating with a seat formed around said valve port.

The valve component may conveniently be spring-urged into engagement with the closed end of the cylinder.

The invention will now be described, by way of example, with reference to the single accompanying drawing which is a side view, partly in cross section, of one form of the master cylinder of the invention.

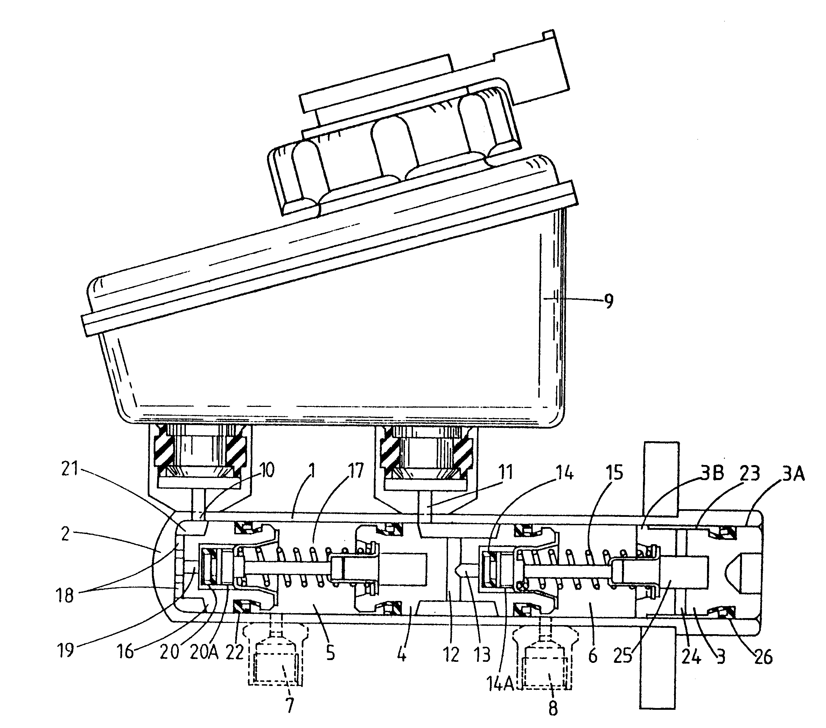

Referring to the drawing, the master cylinder illustrated therein comprises a pressure cylinder 1 in the form of a thin walled steel tube of uniform wall thickness having a closed end 2. The cylinder has slidably mounted therein a primary piston 3 and a secondary piston 4 which are arranged to divide the cylinder into a two pressure chambers 5 and 6 from which fluid is supplied under pressure through respective fluid outlets 7 and 8.

Fluid is supplied to the pressure cylinder from a reservoir 9 through a pair of reservoir ports 10 and 11. The port 11 is able to communicate with the pressure chamber 6 via a radial passage 12 in the piston 4 and an axial port 13 controlled by a centre valve assembly 14 which, when not actuated, rests in its open position under the action of a spring 15 which also acts to separate the pistons 3 and 4. Communication between the reservoir port 10 and pressure chamber 5 takes place through passages formed in a valve component 16 urged against the closed end 2 of the cylinder by a spring 17 disposed between this component and the piston 4, such passages including radial passage parts 18, which may conveniently be defined by grooves in the end wall of the component and the flat inner face of the end 2, and a communicating axial passage in the form of an axially directed valve port 19 controlled by a further centre valve assembly 20 which co-operates with a seat formed around the valve port. The valve assembly 20 again rests in its open position under the action of a spring 17 separating the piston 4 from the component 16. Communication between the port 10 and radial passage 18 is via an annular chamber 21 defined between the valve component 16 and the pressure cylinder wall. The valve component is provided with a seal 22 to isolate the annular chamber 21 from the pressure chamber 5.

The operation of the master cylinder described to actuate a braking system is generally conventional and will be well understood by those versed in the art. Each valve assembly 20 has a respective surrounding coil spring 14A, 20A acting to urge the valve assembly towards its closed position but normally overcome by the opposing springs 15,17. Movement of the pistons 3 and 4 towards the closed end of the bore relieves the force of the springs 15, 17, enabling the springs 14A, 20A to predominate, so as to push the valve assemblies 14, 20 into positions in which they close the ports 13, 19.

The primary piston 3 is supported within the cylinder by a pair of lands 3A, 3B at its respective end portions, the land 3B being such as to pass over the outlet port 8 during actuation. An annular recess 23 between the lands communicates with the pressure chamber 6 via radial passages 24 and an axial passage 25, thereby allowing hydraulic fluid to wet the wall of the cylinder between the lands to facilitate sliding thereon of the piston seal 26.

It will be seen that the use of the valve component 16 obviates any necessity for machining the end 2 of the cylinder, since a suitable seating around the port 19 can be formed within the insert for co-operation with the centre valve 20. Such a seat may be produced by machining the insert prior to its assembly into the cylinder or by any other suitable forming operation, including accurately forming the seat during a moulding operation to produce the valve component 16.

The form of the valve component may be varied as desired; for example, the passages 18 may be defined by holes through the component 16, rather than by the grooves described.

## CLAIMS.

1. An hydraulic master cylinder comprising a pressure cylinder having a closed end, at least one piston movable therein, a separate valve component disposed within the cylinder adjacent said closed end and held against a fixed surface, said component providing a passage between a valve port of the component and a flow path of said cylinder, and a valve member associated with said piston and operable to control fluid flow past said valve port.

2. A master cylinder according to Claim 1 wherein the valve member is normally urged towards its open position and moved, as a result of operative movement of the piston, to a position in which it closes said valve port.

3. A master cylinder according to Claim 1 or Claim 2 wherein the valve component is shaped to provide an annular chamber communicating with an inlet/outlet port of the cylinder and said passage communicates with said chamber.

4. A master cylinder according to any one of the preceding claims wherein the valve port is in the form of an axially directed opening and said passage extends radially between the valve port and said flow path, the valve member co-operating with a seat formed around said valve port.

5. A master cylinder according to Claim 4 wherein said radial passage is defined by one or more grooves in the end wall of the valve component and an inner end wall of the cylinder.

6. A master cylinder according to any one of Claims 3 to 5 wherein said annular chamber is defined between a reduced diameter portion of the valve component and an internal cylindrical wall portion of the cylinder.

7. A master cylinder according to any one of the preceding claims wherein the valve component is spring-urged into engagement with the closed end of the cylinder.

8. A master cylinder according to any one of the preceding claims wherein the valve component is hollow and contains the valve member.

9. A master cylinder according to any one of Claims 2 to 7 wherein the valve component is urged towards its closed position by a first spring and towards its open position by a stronger second spring, the force of which is relieved during actuating movement of the piston to permit said first spring to urge the valve component into its closed position.

10. A master cylinder according to Claim 9 wherein said second spring also urges the valve component into engagement with the closed end of the cylinder.

11. An hydraulic cylinder substantially as hereinbefore described with reference to and as shown in the accompanying drawing.

0219260